Europäisches Patentamt

European Patent Office

Office européen des brevets

(19)

(11) Veröffentlichungsnummer: **0 054 704**
**B1**

(12)
# EUROPÄISCHE PATENTSCHRIFT

(45) Veröffentlichungstag der Patentschrift:
**13.05.87**

(51) Int. Cl.⁴: **H 01 L 41/08**, H 02 K 33/00

(21) Anmeldenummer: **81109043.0**

(22) Anmeldetag: **27.10.81**

---

(54) **Stellglied mit piezokeramischem Körper.**

---

(30) Priorität: **23.12.80 DE 3048631**

(43) Veröffentlichungstag der Anmeldung:
**30.06.82 Patentblatt 82/26**

(45) Bekanntmachung des Hinweises auf die Patenterteilung:
**13.05.87 Patentblatt 87/20**

(84) Benannte Vertragsstaaten:
**AT BE CH DE FR GB IT LI NL SE**

(56) Entgegenhaltungen:
**EP - A - 0 050 791**
**US - A - 3 835 338**

**IBM TECHNICAL DISCLOSURE BULLETIN, Band 22, Nr. 7, Dezember 1979, New York, G. BINNIG et al., "Piezo drive with coarse and fine adjustment"**

(73) Patentinhaber: **Kleinschmidt, Peter, Dipl.-Phys.,
Klagenfurter Strasse 12, D-8000 München 90 (DE)**
Patentinhaber: **Meixner, Hans, Dr.,
Max-Planck-Strasse 5, D-8013 Haar (DE)**
Patentinhaber: **Mágori, Valentin, Dipl.-Phys.,
Limburgstrasse 17, D-8000 München 90 (DE)**

(72) Erfinder: **Kleinschmidt, Peter, Dipl.-Phys., Klagenfurter
Strasse 12, D-8000 München 90 (DE)**
Erfinder: **Meixner, Hans, Dr., Max-Planck-Strasse 5,
D-8013 Haar (DE)**
Erfinder: **Mágori, Valentin, Dipl.-Phys.,
Limburgstrasse 17, D-8000 München 90 (DE)**

---

ACTORUM AG

**Beschreibung**

Die vorliegende Erfindung bezieht sich auf ein Stellglied mit piezokeramischem Körper.

Im Sinne des Art. 54 (3) und hinsichtlich der benannten Vertragsstaaten CH, DE, FR, GB, IT, LI, NL und SE zu berücksichtigen ist die ältere, nicht-vorveröffentlichte Patentanmeldung EP-A-0 050 791, die der deutschen Anmeldung DE-A-3 040 563.1 entspricht, in der ein Stellglied mit einem piezoelektrischen Körper als Wandler beschrieben ist. Dieser piezoelektrische Körper besteht aus einer Anzahl Lamellen aus piezokeramischem Material, die mit ihren Hauptflächen ganzflächig, gegeneinander unverschiebbar, miteinander verbunden sind, wobei die Länge der einzelnen Lamellen und damit des ganzen Körpers mindestens fünfmal so gross wie die Dicke der einzelnen Lamelle ist und wobei die Lamellen alle gleiche Dicke haben.

Eine einfache Ausführungsform eines solchen Körpers ist die, bei der eine Anzahl derartiger piezokeramischer Lamellen, jede einzelne auf ihrer Hauptfläche mit einer Metallisierung als Elektrode versehen, über ihre jeweiligen Hauptflächen hinweg miteinander verklebt sind. Diese Anzahl von Lamellen bildet damit einen mechanisch stabilen Stab oder dergleichen. Die bereits erwähnten Metallisierungen haben nach aussen führende elektrische Anschlüsse. Alle Lamellen sind elektrisch parallelgeschaltet an eine steuerbare elektrische Anregungsspannung angeschlossen.

Je nach Höhe der elektrischen Anregungsspannung ergibt sich eine piezoelektrisch bewirkte Längenänderung dieses aus Lamellen aufgebauten Körpers. Wegen des Vorzeichens des piezoelektrischen Koeffizienten $d_{31}$ ergibt sich für eine solche angelegte elektrische Spannung, deren Feldrichtung im piezokeramischen Material der einzelnen Lamelle die dort vorhandene eingeprägte Polarisation unterstützt, eine Verkürzung dieses lamellierten Körpers. Eine elektrisch bewirkte Verlängerung dieses lamellierten Körpers erhält man dann, wenn man nach vorangegangener elektrischer Aufladung (durch wie voranstehend angegebene Spannung) der elektrische Kapazitäten bildenden Lamellen des Körpers alle diese Lamellen kurzschliesst, d.h. diese Kapazitäten sich entladen lässt. Der zuvor durch elektrische Kräfte im aufgeladenen Zustand verkürzte Körper dehnt sich dann wieder entsprechend rasch auf seine ursprüngliche Länge des neutralen Zustands aus.

Lediglich der Vollständigkeit halber sei erwähnt, dass ein Stellglied, bestehend aus einem Stapel aufeinanderliegender Tabletten aus piezokeramischem Material, bei denen der $d_{33}$-Piezoeffekt ausgenutzt wird, das entgegengesetzte Verhalten hat, d.h. dieser Tablettenstapel erfährt eine Elongation in Richtung senkrecht zur Hauptfläche der Tabletten, d.h. in seiner Stapelhöhe, wenn man an die einzelnen Tabletten eine wiederum die Polarisationsrichtung der Piezokeramik der Tabletten unterstützende elektrische Spannung anlegt.

Es ist bereits der Vorschlag bekannt geworden, einen wie zuletzt beschriebenen Tablettenstapel mit wenigstens zwei wie vorangehend beschriebenen lamellierten Körpern aus Piezokeramik kombiniert in einem Stellglied zu verwenden. Der Tablettenstapel und die lamellierten Körper sind nebeneinanderliegend benachbart angeordnet und zwar derart, dass der Tablettenstapel zwischen wenigstens zwei lamellierten Körpern liegt. An ihrem jeweils einen benachbarten Ende sind der Tablettenstapel und die lamellierten Körper durch eine mechanisch stabile Traverse miteinander verbunden. Werden die jeweils gegenüberliegenden Enden der wenigstens zwei aussenliegenden lamellierten Körper mit der Masse, z.B. mit dem Gehäuse oder Gestell einer Maschine oder dergleichen, verbunden, so ist das benachbarte Ende des Tablettenstapels das aktive Ende eines derartigen Stellglieds, von dem aus z.B. ein Ventil oder dergleichen (gegenüber dem Gehäuse oder Rahmen der Maschine) steuerbar betätigt werden kann. Wegen des $d_{31}$-Effekts in den lamellierten Körpern und des $d_{33}$-Effekts im Tablettenstapel ergibt sich bei elektrischer Parallelschaltung des lamellierten Körpers und des Tablettenstapels für eine angelegte elektrische Spannung mit die eingeprägte Polarisation unterstützender Richtung ihres Feldes eine resultierende Dilatations-Bewegung dieses Stellglieds.

Aus der Druckschrift US-A-3 835 338 ist ferner ein Ultra-Micromanipulator bekannt, bei dem eine Sonde in axialer Richtung durch ein elektrisch zu betätigendes Stellglied bewegt wird, das einen piezoelektrischen Körper hat, der aus einer Anzahl mit Elektroden versehenen Lamellen besteht, die sich zwischen den Enden dieses Körpers erstrecken und aus piezokeramischem Material bestehen, wobei bei Anlegen einer elektrischen Spannung mit die Polarisation des Materials der Lamellen unterstützender Feldrichtung sich dieser Körper verformt.

Im Gegensatz zur vorliegender Erfindung erstrecken sich die Lamellen orthogonal zur Bewegungsrichtung, und ihre Hauptflächen sind untereinander auch nicht mechanisch gegeneinander unverschiebbar verbunden, so dass sie sich bei Anlegen der elektrischen Spannung nicht verkürzen, sondern verbiegen.

Bezüglich weiteren Standes der Technik zu piezoelektrisch betätigten Stellgliedern sei auf die Druckschriften DE-PS 1 798 339; Feinwerktechnik u. Messtechnik, Bd. 87 (1979), Seiten 181–183; Industr. Research Magazin, Bd. 4 (1978), Seite 500 hingewiesen.

Es ist eine Aufgabe der vorliegenden Erfindung, ein piezoelektrisches Stellglied anzugeben, das für eine vorgegebene Betätigungskraft einen möglichst geringen Querschnitt besitzt und bei dem sich Befestigungsort und Wirkungsort an dem gleichen Ende des langgestreckten Stellglieds befinden. Insbesondere soll dieses Stellglied aus möglichst gleichartig aufgebauten, gegebenenfalls auch miteinander identischen piezokeramischen Einzelteilen bestehen. Dieses Stellglied soll auch dazu geeignet sein, energiesparend betrieben zu werden, und zwar dies mit möglichst geringem zusätzlichen elektronischen Aufwand.

Diese Aufgabe wird durch ein Stellglied nach dem Patentanspruch 1 gelöst. Weitere Ausgestaltungen und Weiterbildungen gehen insbesondere aus dem Anspruch 2 sowie auch aus den Unteransprüchen hervor.

Die vorliegende Erfindung geht u.a. von der Überlegung und dem Ziel aus, das erfindungsgemässe Stellglied derart aufzubauen, dass es eine vergleichsweise – relativ zum Stellhub gesehen – kurze Baulänge hat und dass der Befestigungsort am Stellglied, mit dem es an einer Maschine oder dergleichen fest anzubringen ist, und sein aktives Ende (bzw. der Wirkungsort des Stellglieds), mit dem das Stellglied seine positive und negative Elongations-Bewegung gegenüber dem Befestigungsort ausführt, auf derselben Seite bzw. am selben Ende des Stellglieds beieinanderliegen. Insbesondere kann dieses aktive Ende des Stellglieds ein zentraler Stössel desselben sein, der von dem Befestigungsgewinde umgeben ist. Beim erfindungsgemässen Stellglied können die Wirkungslinien der Kräfte in den wenigstens zwei, vorzugsweise drei beteiligten piezoelektrischen Körpern sehr eng benachbart sein, um Durchbiegungen der Traverse zu vermeiden. Dadurch kann die störende träge Masse der Traverse reduziert werden. Der Aufbau eines erfindungsgemässen Stellglieds lässt in einfacher Weise zu, vorteilhafte Dämpfungsmassnahmen an dem Stellglied vorzusehen. Das erfindungsgemässe Stellglied kann auch so bemessen werden, dass seine Massenkräfte derart verteilt sind, dass eine besonders hohe Antriebsgeschwindigkeit vorliegt, ohne dass man für diese Konstruktion wesentlich von der Bemessung abweichen muss, die dagegen optimale Kraftausnutzung gewährleistet.

Ein wie erfindungsgemässes Stellglied ist hervorragend dazu geeignet, die zur Betätigung dieses Stellglieds notwendige elektrische Aufladungs-Energie stets innerhalb des Stellglieds wiederzuverwenden, so dass nur noch die zwangsläufig auftretenden mechanischen, dielektrischen Verluste sowie Umladeverluste durch elektrische Nacheinspeisung kompensiert werden müssen. Das erfindungsgemässe Stellglied enthält im Prinzip zwei Ladungsspeicher, wobei sich die elektrische Ladung im einen Stellzustand im einen Speicher und im anderen Stellzustand im anderen Speicher befindet.

Weitere Erläuterungen der Erfindung gehen aus der nachfolgenden, anhand der Figuren gegebenen Beschreibung von bevorzugten Ausführungsbeispielen hervor.

Fig. 1 zeigt einen prinzipiellen Aufbau eines erfindungsgemässen Stellglieds.

Fig. 2 zeigt eine bevorzugte weitere Ausführungsform.

Fig. 3 zeigt eine perspektivische Ansicht einer praktischen Ausführung als Flach-Stellglied.

Fig. 4 und 5 zeigen Schaltungen für einen Betrieb.

Fig. 6 bis 9 zeigen Schaltungen für einen bevorzugten elektrischen Betrieb mit elektrischer Umladung der einzelnen piezoelektrischen Körper des Stellglieds untereinander.

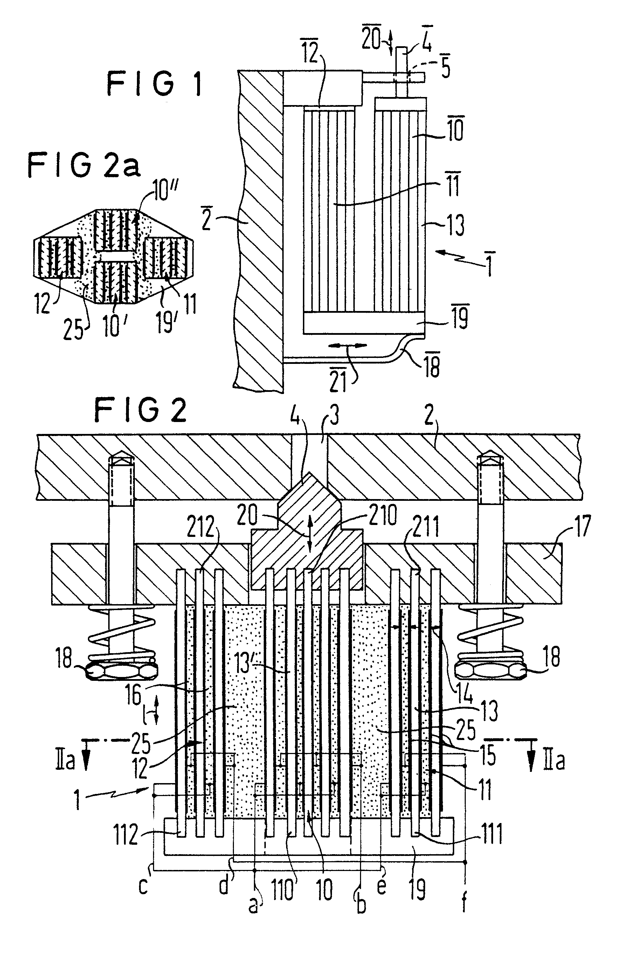

Fig. 1 zeigt eine erste Ausführungsform eines erfindungsgemässen Stellglieds 1. Es besteht aus zwei piezoelektrischen Körpern 10, 11, die aus piezoelektrischen Lamellen 13 aufgebaut sind. Einzelheiten eines solchen Aufbaues sind bereits in der älteren P 3 040 563.1 beschrieben. Das in der Fig. 1 obere Ende des piezoelektrischen Körpers 11 ist mit der Vorrichtung 2 verbunden, an der bzw. in der das erfindungsgemässe Stellglied 1 anzubringen ist. Diese Verbindungs- bzw. Anbringungsstelle ist der Befestigungsort 12 des Stellglieds 1. Mit 19 ist eine Traverse bezeichnet, an der das dem Befestigungsort 12 gegenüberliegende Ende des piezoelektrischen Körpers 11 und seitlich daneben das ebenfalls in der Fig. 1 untere Ende des zweiten piezoelektrischen Körpers 10 befestigt sind, so dass die beiden piezoelektrischen Körper 10 und 11 und die Traverse 19 zusammen ein festes biegesteifes Teil sind. Das in der Fig. 1 obere Ende des piezoelektrischen Körpers 10 ist der Wirkungsort des Stellglieds 1, an dem beispielsweise ein Stössel 4 befestigt ist, der die Hub-Arbeit des erfindungsgemässen Stellglieds 1 abgibt. Mit dem Doppelpfeil 20 ist der Hub bzw. diese Hub-Arbeit des Stellglieds 1 angedeutet. Mit 18 ist eine an der Vorrichtung 2 und an der Traverse 19 befestigte Blattfeder bezeichnet, die mit dem Doppelpfeil 21 auftretende Kraftwirkungen aufnimmt. Ohne die Blattfeder 18 würde das erfindungsgemässe Stellglied 1 bzw. die Traverse 19 in den Richtungen des Doppelpfeils 21 ausweichende Bewegungen ausführen. In zum Doppelpfeil 21 senkrechter Richtung übt die Blattfeder 18 keinen nennenswerten Widerstand auf eine Bewegung der Traverse 19 aus.

Das erfindungsgemässe Stellglied 1 mit seinen zwei piezoelektrischen Körpern 10 und 11 arbeitet nach dem Tandem-Prinzip, d.h. die beiden piezoelektrischen Körper 10, 11 sind elektrisch so geschaltet, dass im einen Stellzustand der eine piezoelektrische Körper (beispielsweise 10) maximale Kontraktion und der andere piezoelektrische Körper (beispielsweise 11) maximale Dilatation hat. In diesem Falle ragt der in der Bohrung 5 geführte Stössel 4 nur minimal über den oberen Rand dieser Führung 5 heraus. Im dagegen anderen Stellzustand bei maximaler Dilatation des piezoelektrischen Körpers 10 und maximaler Kontraktion des anderen piezoelektrischen Körpers 11 ragt der Stössel 4 maximal weit über den oberen Rand der Bohrung 5 heraus. Bei piezoelektrischer Keramik und einem wie angegebenen Lamellen-Aufbau der piezoelektrischen Körper hat ein solcher maximale Kontraktion, d.h. geringste Länge im aufgeladenen Zustand und er hat im elektrisch entladenen Zustand seine grösste Längenabmessung, d.h. maximale Dilatation.

Einzelheiten über den elektrischen Betrieb eines wie erfindungsgemässen Stellglieds 1 gehen aus der hierfür speziellen Beschreibung hervor, die sich dann auch auf die anderen Ausführungsformen eines erfindungsgemässen Stellglieds beziehen.

Fig. 2 zeigt einen prinzipiellen Aufbau eines erfindungsgemässen Stellglieds 1. Mit 2 ist die Vorrichtung bezeichnet, an der das Stellglied anzubringen ist. Es ist dies z.B. ein Anteil der Gehäusewand eines Einspritzventils. Dieses hat eine Ventilöffnung 3, in der wiederum sich der am aktiven Ende des Stellglieds befestigte Ventilkegel 4 befindet. Mit 10, 11 und 12 sind drei Körper bezeichnet, die aus piezoelektrischen Lamellen 13, 13' aufgebaut sind. Wie dies wiederum bereits zu der älteren Anmeldung DE-A-3 040 563.1 beschrieben ist, können die einzelnen piezoelektrischen Körper 10, 11, 12 nach unterschiedlichen Prinzipien aufgebaut sein, z.B. mit unmittelbar aufeinanderliegenden Lamellen 13, 13' oder mit Lamellen 13, 13', zwischen denen sich inaktive Zwischenlagen befinden. Die einzelnen Lamellen 13, 13' eines jeweiligen Körpers 10, 11, 12 sind mit ihren (zur Darstellungsebene der Fig. 1 senkrechten) Hauptflächen derart fest miteinander verbunden, dass die Lamellen 13, 13' gegeneinander nicht verschiebbar sind. Mit den Pfeilen 14 ist die eingeprägte elektrische Polarisation der einzelnen Lamellen 13, 13' bezeichnet. Zwischen den Lamellen 13, 13' eines jeweiligen Körpers 10, 11, 12 und auf den äusseren Hauptflächen derselben sind Elektroden-Belegungen, z.B. in der Form aufgesputterter Metallisierungen 15 der Keramikoberfläche, aufgebracht. Mit dem Bezugszeichen 16 ist auf die zwischen den Lamellen 13, 13', d.h. zwischen den einander gegenüberliegenden Metallisierungen 16 befindlichen Schichten hingewiesen, die die mechanische Verbindung jeweils benachbarter Lamellen 13, 13' miteinander bewirken. Die Schichten 16 können vorzugsweise Klebstoff sein. Es kann aber auch hierfür eine Lotschicht einer Verlötung benachbarter Metallisierungsschichten 15 sein. Weiter können diese einzelnen (Abstands-)Schichten 16 auch Klebefolien sein, wie z.B. das glasfaserverstärkte Epoxid-Material «Prepreg» der Fa. Ciba.

Es ist ein Körper 10 zwischen wenigstens zwei weiteren Körpern 11 und 12 angeordnet. Die in der Fig. 1 oberen Enden 211 und 212 der beiden aussenliegenden Körper 11 und 12 sind mit einem Teil 17 z.B. durch Ankleben, Anschrauben oder dergleichen fest verbunden, wobei dieses Teil 17 auch ein Anteil der Gehäusewand 2 sein kann oder vorzugsweise – wie dargestellt – mit Schrauben 18 an der Gehäusewand 2 einstellbar und justierbar befestigt ist. Die in der Darstellung der Fig. 1 unteren Enden 110, 111, 112 der Körper 10, 11, 12 sind durch eine biegesteife Traverse 19 miteinander verbunden. Eine Dilatation der Körper 11 und 12 durch Wegnahme einer zuvor in polarisationsunterstützender Richtung angelegten elektrischen Spannung führt zu einer (in der Fig. 1) Abwärtsbewegung der Traverse 19. Da symmetrischer Aufbau mit zwei Körpern 11 und 12 vorliegt, wirkt auf die Traverse 18 keinerlei Dreh- oder Kippmoment. Mit der Dilatation der Körper 11 und 12 wird das untere Ende 110 des Körpers 10 heruntergezogen. Bei zusätzlicher gegensinniger Bewegung, nämlich Kontraktion, des Körpers 10 durch Anlegen einer polarisationsunterstützenden Spannung wird das Teil 4, das mit dem oberen Ende 210 des Körpers 10 fest verbunden ist, herabbewegt. Die Dilatation der Körper 11 und 12 und die vorzugsweise gleichzeitig ausgeführte Kontraktion des Körpers 10 führt additiv zu einer verdoppelten Hub-Bewegung des Teils 4, wie sie mit dem nach unten gerichteten Pfeil des Doppelpfeils 20 angedeutet ist. Kontraktion der Körper 11 und 12 und vorzugsweise gleichzeitige Dilatation des Körpers 10 führt zu entsprechend nach oben gerichteter, mit dem oberen Ende des Doppelpfeils 20 angedeuteter Bewegung des Teils 4.

Der wie dargestellte und beschriebene symmetrische Aufbau führt zu reiner Longitudinalbewegung des Teils 4 und es sind Kipp- oder Schwenkbewegungen vermieden. Ein entsprechendes Ergebnis wird auch mit drei, vier oder mehr aussenliegenden Körpern erreicht, wie sie durch die Körper 11 und 12 repräsentiert sind. Eine andere Variante des Aufbaues kann – statt des vorangehend beschriebenen nur einen Körpers in der Mitte – auch zwei (oder noch mehrere) zwischen den Körpern 11 und 12 liegende, symmetrisch angeordnete Körper haben, die beide gleichsinnig wirksam sind. Bei einer solchen Ausführungsform (vgl. Fig. 2a) ist sozusagen der eine mittlere Körper 10 in zwei Körper 10', 10'' aufgeteilt, die einen Abstand voneinander haben können und die wiederum symmetrisch zu den aussenliegenden, jeweils gegensinnig arbeitenden Körpern angeordnet sind. Beide Körper 10', 10'' wirken zusammen auf das Teil 4. Die Traverse 19' muss dann entsprechend grosse Grundfläche haben, um alle unteren Enden aller Körper aufnehmen zu können, und sie muss auch entsprechend ausreichend biegesteif sein. Eine solche Ausführungsform mit zwei innenliegenden Körpern kann insoweit vorteilhaft sein, als diese beiden innenliegenden Körper und zwei zugehörige aussenliegende Körper 11 und 12 für sich identischen Aufbau haben können und damit für die innenliegenden Körper einerseits und die aussenliegenden Körper andererseits gleich grosse elektrische Kapazität vorliegt.

Der prinzipielle Aufbau nach Fig. 2 kann im Detail in noch weiter mehrfach variierter Ausführungsform ausgestaltet sein, nämlich je nachdem auf welch einen oder mehreren Vorteile der insgesamt mit dem erfindungsgemässen Prinzip gebotenen Vorteile besonderes Gewicht gelegt wird. Es kann z.B. auf optimale Kraftwirkung bzw. optimale Kraftausnutzung vorrangig Wert gelegt sein. Für andere Anwendungsfälle kann insbesondere rasches Ansprechen und rasche Ausführung der Dilatations- und Kontraktions-Bewegung, z.B. für rasches Öffnen und Schliessen eines Ventils, besonders wichtig sein. Für den ersteren Fall empfiehlt es sich, den aktiven Querschnitt aller piezokeramischer Lamellen 13 des innenliegenden Körpers 10 und die Summe der aktiven Querschnitte aller piezokeramischen Lamellen 13' der beiden Körper 11 und 12 zusammengenommen gleich gross zu machen.

Unter aktivem Querschnitt der piezokeramischen Lamelle 13, 13' ist dabei diejenige Quer-

schnittsfläche zu verstehen, die senkrecht zur Darstellungsebene der Fig. 1 und senkrecht zur (mit der Metallisierung 15 belegten) Hauptfläche der Lamellen 13, 13′ liegt. Das heisst, die Flächennormale der jeweils angesprochenen Querschnittsfläche ist parallel zu der mit dem Doppelpfeil 1 bezeichneten Längsrichtung dieser Lamellen 13, 13′. Die (allerdings ohnehin nur sehr dünnen) Metallbelegungen 15 und die beispielsweise aus Klebstoff bestehenden Zwischenschichten 16 und eventuell zusätzlich noch vorgesehene, in der Figur nicht dargestellte Zwischenlagen bzw. Distanzschichten oder -folien sind piezoelektrisch inaktiv. Die jeweils angegebene Summe der Querschnitte bezieht sich daher allein auf die piezokeramischen Querschnitte der Lamellen 13, 13′. Es ist hierfür der Begriff «aktiver» Querschnitt verwendet.

Bei der voranstehend erläuterten Ausführungsform mit gleich grossem aktiven Querschnitt für den innenliegenden Körper 10 und für die Summe der aussenliegenden Körper 11 und 12 teilt sich die Krafterzeugung und der Hub und damit die Arbeit zu gleichen Teilen auf diesen innenliegenden Körper 10 und auf die Gesamtheit der aussenliegenden Körper 11 und 12 auf. Auch die elektrischen Kapazitäten des Körpers 10 einerseits und der Gesamtheit der Körper 11 und 12 andererseits sind gleich gross. Es sind damit die beiden Energiespeicher ebenfalls gleich gross und wegen des gegensinnigen Betriebs dieser beiden Anteile des erfindungsgemässen Stellglieds ist es hier möglich, die für den Betrieb des Stellglieds notwendige elektrische Anregungsenergie vom einen Energiespeicher zum anderen Energiespeicher hin- und herfliessen zu lassen. Erfolgt dieses Hin- und Herfliessenlassen über eine angepasst bemessene Induktivität – und natürlich über einen damit in Reihe liegenden steuerbaren Schalter – so kann ein praktisch verlustloser Hin- und Hertransport der vollständigen für den Stellbetrieb notwendigen Energie erfolgen. Will man bei dieser Ausführungsform nur einheitlich ausgebildete Körper verwenden, kann für den innenliegenden Körper 10 die bereits oben beschriebene Variation vorgesehen werden, nämlich anstelle dieses in der Fig. 1 dargestellten einzigen Körpers 10 nebeneinandergeordnet und mechanisch parallelgeschaltet zwei solche Körper zu verwenden, wie sie für die Körper 11 und 12 vorgesehen sind.

Für eine dagegen sehr rasche Bewegung des Teils 4, z.B. des Kegels eines Ventils, empfiehlt es sich, von den beiden mechanisch hintereinandergeschalteten Anteilen des erfindungsgemässen Stellglieds – nämlich von dem einerseits durch die Körper 11 und 12 gebildeten Anteil und dem andererseits durch den Körper 10 gebildeten Anteil – denjenigen Anteil mit geringerer Masse auszubilden, der im mechanischen Kraftfluss dem zu bewegenden Teil 4 näher liegt. Es ist dies bei der Darstellung der Fig. 2 der Körper 10. Zum Beispiel kann als Körper 10 ein einziger mit den Körpern 11 und 12 identischer Körper verwendet werden, der dann entsprechend nur die halbe träge Masse der Körper 11 und 12 zusammengenommen hat.

Dieser leichtere Körper 10 kann mit gleich grosser Kraft entsprechend schneller – nämlich doppelt so gross – beschleunigt werden, so dass nahezu doppelt so grosse Ansprechgeschwindigkeit für das Teil 4 erreicht ist. Es ist lediglich in Kauf zu nehmen, dass von dem in dieser Weise bemessenen innenliegenden Körper entsprechend geringere Stellkraft zur Gesamtsumme der Stellkräfte des ganzen erfindungsgemässen Stellglieds beigetragen wird. Verwendet man wie bei dieser Ausführungsform für die drei in der Fig. 2 dargestellten Körper in derartiger Weise drei identische lamellierte Körper, so hat der innenliegende, zu den Körpern 11 und 12 gegensinnig arbeitende lamellierte Körper eine nur halb so grosse elektrische Kapazität. Für ein wie voranstehend beschriebenes vollständiges Umladen der elektrischen Anregungsenergie ist in diesem Fall dem innenliegenden Körper des Stellglieds ein entsprechender elektrischer Zusatzkondensator parallel zu schalten.

Voranstehend sind zwei Varianten beschrieben, nämlich mit gleich grossem aktiven Querschnitt der Summe der aussenliegenden Körper 11, 12 einerseits und dem einen (oder der Summe des aufgeteilten einen) innenliegenden Körper 10. Die zweite spezielle beschriebene Ausführungsform hat doppelt so grosse Kapazität für die beiden aussenliegenden Körper 11, 12. Im ersteren Falle ist optimale Stellkraft und vollständiger Ladungsausgleich für ein Umladen gegeben. Im zweiten Fall erhält man ein Stellglied, das höhere Arbeits- und Ansprechgeschwindigkeit hat. Kompromisslösungen liegen zwischen diesen beiden Fällen, wenn das Verhältnis der Summe der aktiven Querschnitte der aussenliegenden Körper zum aktiven Querschnitt des innenliegenden Körpers zwischen den Werten 1 und 2 liegt.

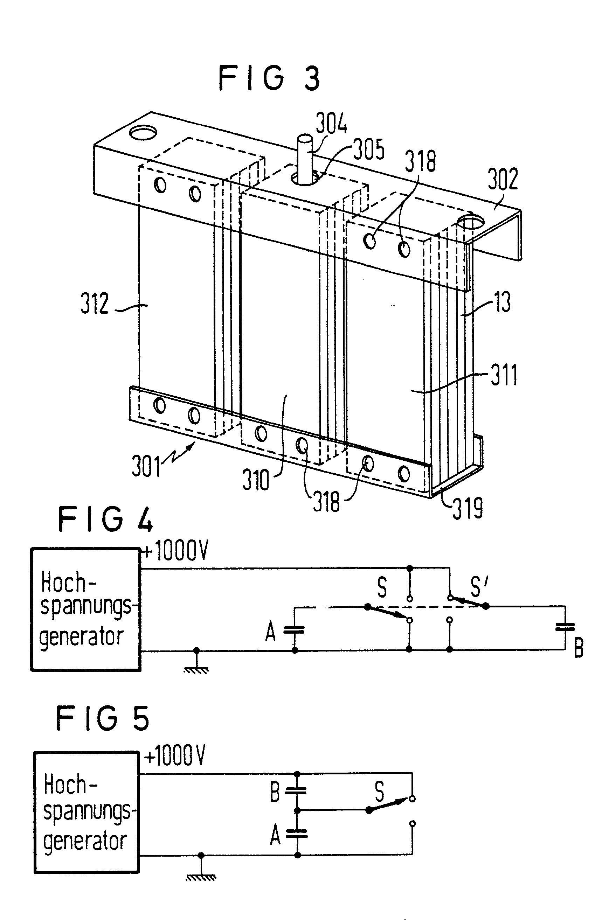

Fig. 3 zeigt eine Flachbauform eines erfindungsgemässen Stellglieds 301 mit den piezoelektrischen Körpern 310, 311 und 312, die den piezoelektrischen Körpern 10, 11, 12 des Stellglieds 1 entsprechen. Sie bestehen wiederum aus piezoelektrischen Lamellen 13. An ihren, in der Fig. 3 oberen Enden sind die beiden aussenliegenden piezoelektrischen Körper 311 und 312 z.B. durch Schrauben 318 mit einem U-Profil 302 fest verbunden, mit dem das Stellglied 301 an der Vorrichtung zu befestigen ist, an bzw. in der dieses Stellglied arbeiten soll. Der mittlere piezoelektrische Körper 310 ist in seinem oberen Ende gegenüber dem U-Profil 302 frei beweglich, jedoch von diesem geführt. Durch eine Bohrung 305 des U-Profils 302 ragt der Arbeitsstössel 304 des Stellglieds 301 heraus. Mit 319 ist die Traverse bezeichnet, an der alle drei piezoelektrischen Körper 310, 311 und 312 mit ihrem jeweils unteren Ende befestigt sind. Diese Befestigung kann ebenfalls mit Schrauben 318 bewirkt sein. Zur Aufnahme der Schrauben 318 haben die piezoelektrischen Körper 310, 311 und 312 entsprechende durchgehende Bohrungen. Die U-Form der Traverse 319 gewährleistet eine hohe Biegesteifigkeit. Übrige Einzelheiten des Stellglieds 301 und seine Betriebsweise entsprechen dem Stellglied 1 aus Fig. 2 bzw. gehen aus der noch nachfolgenden weiteren Beschreibung hervor.

Die piezoelektrischen Stellglieder $\bar{1}$, 1 und 301 der Fig. 1 bis 3 haben gemäss der Erfindung einen solchen Aufbau, dass sich zur gleichen Zeit kontrahierende piezoelektrische Körper und sich ausdehnende piezoelektrische Körper nahe nebeneinander befinden. Der vorzugsweise enge Spalt zwischen den piezoelektrischen Körpern $\bar{10}$ und $\bar{11}$ bzw. zwischen dem piezoelektrischen Körper 10, 310 einerseits und den piezoelektrischen Körpern 11 und 12 bzw. 311, 312 andererseits wird zur Dämpfung von (Schwing-)Bewegungen der piezoelektrischen Körper bei Änderung vom einen Stellzustand in den anderen Stellzustand vorteilhafterweise mit einem Silikonfett bzw. einer Silikonpaste 25 (nur in Fig. 2 dargestellt) ausgefüllt. In dieser in den beiden Spalten befindlichen Silikonmasse 25 treten dämpfend wirkende Reibungseffekte auf, die jedoch das Arbeiten als Stellglied nicht nennenswert behindern.

Fig. 2 zeigt zusätzlich mit den Leitungen der Bezugszeichen a bis f ein elektrisches Schaltungsbeispiel für die Lamellen 13, 13'. Einander jeweils gegenüberliegende Elektroden-Belegungen 15 sind elektrisch mit einander verbunden. In einander benachbarten Lamellen 13, 13' liegt jeweils entgegengesetzte Polarisationsrichtung des piezoelektrischen Materials in Richtung der Dicke der Lamellen vor. Wie dargestellt, sind miteinander verbundene innenliegende Elektroden-Belegungen mit je einer aussenliegenden Elektroden-Belegung 15 verbunden. Der piezoelektrische Körper 10 hat die nach aussen geführten Anschlüsse a und b. Die beiden piezoelektrischen Körper 11 und 12 haben die nach aussen geführten Anschlüsse e und f sowie c und d. Entsprechend der Zusammenschaltung der piezoelektrischen Körper 11 und 12 als eine Gruppe A sind die Aussenanschlüsse d und f einerseits und die Aussenanschlüsse c und e andererseits miteinander verbunden. Als Masse-Anschluss sind die Anschlüsse c und e auch mit dem Anschluss a des gegenphasig zu betreibenden piezoelektrischen Körpers 10 verbunden. Der äussere Anschluss b des piezoelektrischen Körpers 10, der die Gruppe B bildet, ist galvanisch getrennt von dem gemeinsamen Aussenanschluss f der piezoelektrischen Körper 11 und 12 der Gruppe A.

Bei der wie oben (im Zusammenhang mit Fig. 2a) beschriebenen Variante zu Fig. 2 mit – statt nur einem Körper 10 – mehreren in gleicher Phase zu betreibenden innenliegenden Körpern bilden diese zusammen die Gruppe B, die dann wie die Gruppe A ebenfalls aus beispielsweise zwei piezoelektrischen Körpern besteht.

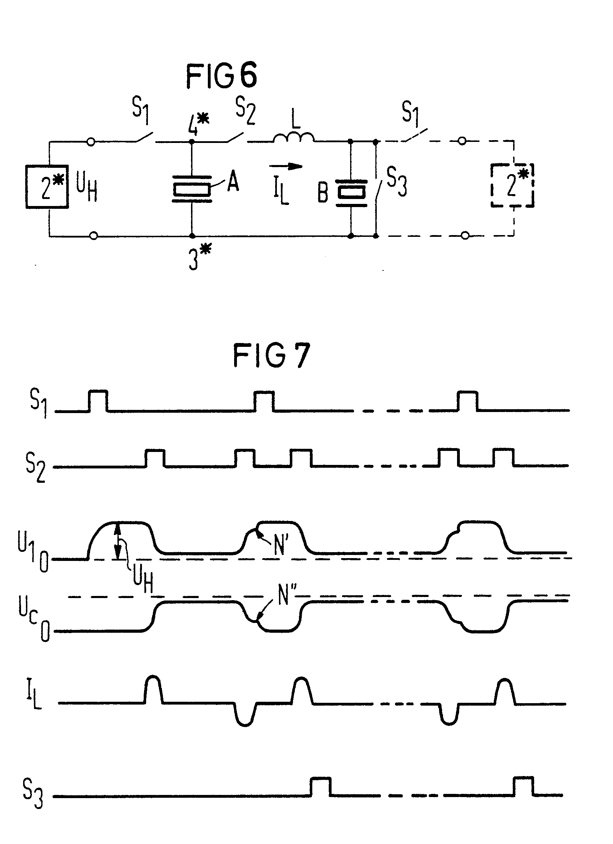

Die Fig. 4 und 5 zeigen je ein Schaltbild für eine Betriebsschaltung eines erfindungsgemässen Stellglieds. Die in den Fig. 4 und 5 mit A bezeichnete Kapazität repräsentiert die piezoelektrischen Körper der einen Gruppe und die Kapazität B repräsentiert die piezoelektrischen Körper der anderen Gruppe, wobei die piezoelektrischen Körper der einen Gruppe im Gegentakt zu denjenigen der anderen Gruppe zu betreiben sind. Für die Ausführungsform nach Fig. 3 mit zwei aussenliegenden piezoelektrischen Körpern besteht die Kapazität A aus der Parallelschaltung der beiden Kapazitäten der piezoelektrischen Körper 11 und 12. Die Kapazität des in Fig. 3 nur einen innenliegenden piezoelektrischen Körpers ist die Kapazität B in den Fig. 4 und 5. Die dargestellten Umschalter S und S' werden taktweise betätigt, womit Auf- und Entladung der Kapazitäten A und B bzw. der piezoelektrischen Körper eines erfindungsgemässen Stellglieds im Gegentakt erfolgt.

Von besonderem Vorteil ist es, ein wie erfindungsgemässes piezoelektrisches Stellglied, das zwei im Gegentakt zu betreibende piezoelektrische Körper bzw. zwei Gruppen A und B im Gegentakt zu betreibender piezoelektrischer Körper enthält, in der Weise elektrisch zu beschalten, dass die zeitweise in dem einen piezoelektrischen Körper gespeicherte Energie in dem einen Stellzustand dieses Körpers bei Übergang bzw. Umschaltung in den anderen Stellzustand auf den einen oder die mehreren anderen piezoelektrischen Körper desselben Stellglieds übertragen wird. Eine Hin- und Herladung der elektrischen Energien innerhalb des Stellglieds, d.h. ein Gegentaktbetrieb der zwei Gruppen piezoelektrischer Körper des Stellglieds, ermöglicht, dass nur noch die zwangsläufigen Verluste an elektrischer Energie jeweils nachgespeist werden müssen, der grosse Anteil an Blindenergie jedoch nicht bei jeder Änderung des Stellzustands vernichtet wird, wie dies bei den Schaltungen nach den Fig. 4 und 5 der Fall ist.

Die Fig. 6, 7, 8 und 9 zeigen das Prinzip und eine spezielle Ausführungsform einer elektrischen Schaltung, wie sie für den Betrieb eines wie erfindungsgemässen Stellglieds mit gegenphasig zu betreibenden piezoelektrischen Körpern besonders bevorzugt ist. In diesen Schaltungen ist jeweils eine Induktivität L, L'' im Stromkreis für die Umladung von einem piezoelektrischen Körper auf den anderen piezoelektrischen Körper bzw. für die Umladung von der einen Gruppe piezoelektrischer Körper auf die andere Gruppe piezoelektrischer Körper vorhanden. Das Schaltbild der Fig. 6 zeigt das Arbeitsprinzip einer Umladung zwischen den Gruppen A und B der piezoelektrischen Körper eines erfindungsgemässen Stellglieds.

Zur elektrischen Aufladung der zu der Gruppe A zusammengefassten piezoelektrischen Körper (11 und 12 in Fig. 2) wird über den zu schliessenden Schalter S1 eine elektrische Spannung $U_H$ angelegt, die z.B. von einer elektrischen Quelle 2* mit einem Innenwiderstand $R_i$ geliefert wird. Mit Vollendung der Aufladung der Gruppe A haben deren piezoelektrische Körper ihren zweiten mechanischen Stellzustand erreicht. Der anfängliche Zustand ohne Anliegen einer elektrischen Spannung ist hier der erste Stellzustand. Im zweiten Stellzustand ist ausser der für die mechanische Arbeit der Gruppe A verbrauchten, von der Quelle 2* zu liefernden elektrischen Energie von dieser noch zusätzlich die in der elektrischen Kapazität der Gruppe A enthaltene Blindenergie zu liefern gewesen, wobei die Blindenergie ein Vielfaches der optimal entnehmbare mechanische Arbeit umgesetzten elektrischen Energie ist.

Nach Erreichen des zweiten Stellzustand wird der Schalter S1 geöffnet, wobei der zweite Stellzustand im wesentlichen erhalten bleibt. Bei Kurzschliessen der Anschlüsse 3 und 4 der Gruppe A miteinander erfolgt ein Ladungsausgleich der Kapazität ihrer Körper, z.B. 11 und 12, womit diese in den ersten Stellzustand wieder zurückgeht. Der dabei fliessende Entladestrom würde bei Kurzschluss die Vernichtung der in der Kapazität enthaltenen Blindenergie bewirken. Diese soll aber gemäss der Weiterbildung nicht verlorengehen. Es wird hierzu (bei geöffnetem Schalter S1) der Schalter S2 geschlossen und der Stromfluss über die Induktivität L und die Kapazität der Gruppe B führt zu einem nahezu ebenso raschen Abfall des Ladezustands der Gruppe A und gleichzeitig zu einer elektrischen Aufladung der Gruppe B. Wie oben erwähnt, kann die Umladezeit $t_u$ gleich der

halben Periodendauer $\frac{1}{f}$ betragen oder als länger vorgegeben werden.

Der Entladevorgang der Gruppe A und der Aufladevorgang der Gruppe B hat abhängig von der Induktivität L und den Kapazitätswerten einen zeitlichen Zustand, in dem die elektrische Spannung an der Gruppe A praktisch gleich Null ist und die gesamte, zuvor in der Gruppe A enthaltene Blindenergie sich in der Gruppe B befindet. In diesem Augenblick höchster Aufladespannung der Gruppe B auf den Wert $U_C$ wird der Schalter S2 geöffnet und eine Rückladung auf das Stellglied 1 unterbleibt, so dass der erste (ungeladene) Stellzustand der Gruppe A (wieder) erreicht ist.

Wie bereits oben angegeben, sind die Kapazitätswerte der Gruppe A und der Gruppe B möglichst gleich gross zu wählen. Die Induktivität L, die Kapazität der Gruppe A bilden zusammen mit der Kapazität der Gruppe B einen Schwingkreis, in dem die Spannung an der Gruppe A entsprechend $\frac{1}{2}U_B(1+\cos t)$ abnimmt und die Spannung an der Gruppe B entsprechend $\frac{1}{2}U_B(1-\cos t)$ zunimmt. Bei gleich grossen Kapazitäten von A und B beträgt die Kreisfrequenz

$$\omega = 2\pi\,f = \frac{1}{\sqrt{L \cdot C/2}}$$

Der Zeitpunkt $t_u$ der Betätigung des Schalters S2 ist durch die halbe Periodendauer $\tau$ dieser Kreisfrequenz $\omega$ gegeben.

Den (erneuten) Übergang der Gruppe A aus seinem ersten Stellzustand in seinen zweiten Stellzustand erreicht man durch erneutes Schliessen des Schalters S2, womit die in der Gruppe B gespeicherte elektrische Energie wieder (abgesehen von Leitungsverlusten) voll auf die Gruppe A übertragen wird und wieder nach der Zeit $\tau/2$ der Schalter S1 geöffnet wird. Ein nicht zu vermeidender Energieverlust kann durch anschliessendes kurzzeitiges Schliessen des Schalters S1 ausgeglichen werden, nämlich indem man aus der Quelle 2 soviel Ladung in die Gruppe A nachfliessen lässt, dass an diesem wieder die ursprüngliche Spannung $U_H$ anliegt. Die Gruppe B ist in diesem Zustand weitgehend entladen.

Eine in der Gruppe B dennoch zurückgebliebene Restladung muss durch Schliessen des Schalters S3 beseitigt werden. Eine solche Entladung würde sich nämlich akkumulieren und bei abwechselnder Änderung der Stellzustände des Stellglieds das Mass des Unterschieds der Stellzustände voneinander (von mal zu mal) verringern. Die Massnahme der Beseitigung der Restladung kann auch an Gruppe A erfolgen. Es genügt aber, wenn an Gruppe B oder an Gruppe A diese Massnahme, d. h. bei jedem zweiten Stellvorgang, durchgeführt wird.

Die Fig. 7 zeigt in sechs Zeilen untereinander den zueinander parallelen zeitlichen Ablauf einzelner Funktionen und Vorgänge der Schaltung nach Fig. 6. Auf der Abszisse ist die Zeit aufgetragen. Die erste Zeile zeigt die Funktion des Schalters S1. Die zweite Zeile gibt die Betätigung des Schalters S2 an. Der sich daraus ergebende Aufladezustand der Gruppe A, d.h. der Verlauf der an Gruppe A anliegenden Spannung $U_S$, gibt Zeile 3 wieder. Zeile 4 zeigt den entsprechenden Spannungsverlauf an Gruppe B und Zeile 5 dazu den Strom I durch die Induktivität L hindurch. Die letzte sechste Zeile gibt den zeitlichen Takt des gegebenenfalls vorgesehenen Schalters S3 wieder.

In den sechs Zeilen ist im linken Anteil der Fig. 7 der Zustand der ersten Betätigung des Stellglieds wiedergegeben. Der Zustand der zweiten und jeder weiteren Betätigung nach einmal erfolgter Aufladung des Stellglieds wird durch den mittleren und durch den rechten Anteil der Fig. 7 wiedergegeben. Mit dem Bezugszeichen N' ist in Zeile 3 auf die Nachladung des Stellglieds aus der Quelle 2 und mit N'' in Zeile 4 auf die restliche Entladung (Beseitigung der Restladung) der Gruppe B durch Schliessen des Schalters S3 (Zeile 6 der Fig. 7) hingewiesen.

Fig. 6 zeigt gestrichelt eine Variante, bei der die Quelle 2* und der Schalter S1 der linken Seite der Fig. 6 entfällt und diese Elemente statt dessen parallel der Gruppe B geschaltet sind. Ihre Funktion ist dabei unverändert, jedoch wird im ersten Betriebsschritt hier die Gruppe B aufgeladen (und die Gruppe A verbleibt – wenn der Schalter S2 offenbleibt – in ihrem ersten anfänglichen Stellzustand). Die Aufladung der Gruppe A und deren Übergang in den zweiten Stellzustand erfolgt dann im nächsten Schritt, wenn der Schalter S2 geschlossen wird. Dabei erfolgt hier auch die erste Aufladung vorteilhafterweise bereits aus der Gruppe B und die Vorgänge laufen ab, wie in Fig. 7 im rechten Teil angegeben und voranstehend erläutert.

Es ist auch noch darauf hinzuweisen, dass in der Schaltung der Fig. 6 Gruppe A und Gruppe B vertauscht werden können.

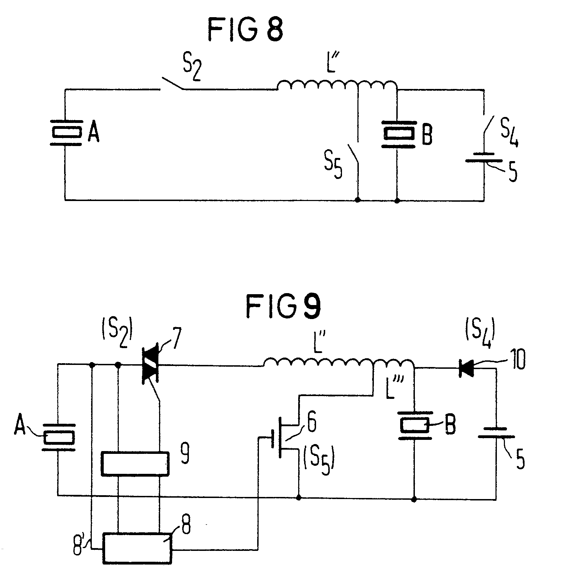

Fig. 8 zeigt eine Schaltung für ein Fahrzeug, in dem als Energiequelle eine Batterie mit z.B. 12 Volt Gleichspannung zur Verfügung steht, aus der heraus ein (in diesem Fahrzeug, insbesondere am Motor) befindliches piezoelektrisches Stellglied zu speisen ist. Mit der Beschreibung der vorangehenden Figur bereits erwähnte Einzelheiten haben in Fig. 8 dieselben Bezugszeichen. Mit 5 ist die (Fahrzeug-)Batterie bezeichnet.

In der ersten Betriebsphase dieser Ausführungsform sind die Schalter S4 und S5 geschlossen. Aus der Batterie 5 werden die Induktivität L" und die Gruppe B aufgeladen. In der folgenden Betriebsphase wird der Schalter S5 geöffnet und der Schalter S2 geschlossen, wobei der Schalter S4 zunächst geschlossen bleibt. Da der in der Induktivität L" fliessende Strom die Tendenz hat weiterzufliessen, wird die Kapazität der Gruppe A aufgeladen und dabei das Feld der Induktivität L" abgebaut. Sobald jedoch der Strom in die Kapazität der Gruppe A auf den Wert Null fällt und bevor der Strom beginnt, rückwärts wieder aus der Gruppe A herauszufliessen, wird der Schalter S2 wieder geöffnet und die Gruppe A bleibt aufgeladen, d.h. ist von seinem zuvor spannungslosen ersten Betriebszustand in seinen aufgeladenen zweiten Betriebszustand gebracht worden. Falls in der Anfangsphase die Gruppe A durch den einen vorstehend beschriebenen Schaltprozessschritt noch nicht voll aufgeladen ist, kann dieser Prozessschritt iterativ wiederholt werden, bis gewünschte Aufladung erreicht ist.

Der weitere Betrieb der Schaltung nach Fig. 8, d.h. die Rückführung der Gruppe A in den ersten, ungeladenen Betriebszustand, erfolgt wieder durch Schliessen des Schalters S2 mit dem Funktionsablauf, wie er zu den vorangehenden Ausführungsformen beschrieben ist. Während dieser Phase ist der Schalter S5 geöffnet.

Eine nächste Wiederaufladung der Kapazität der Gruppe A erfolgt jetzt vorwiegend aus der Gruppe B, wozu der Schalter S2 bis zum Null-Durchgang des Aufladestromes geschlossen wird. Eine Nachladung zum Ausgleich des Ladeverlustes erfolgt durch Schliessen der Schalter S4 und S5, wie oben beschrieben.

Die Schaltung nach Fig. 8 kann auch in etwas abgewandelter Weise betrieben werden, nämlich indem in der ersten Phase zunächst die Schalter S4, S5 und auch S2 geschlossen werden. Der anlaufende Strom wird entsprechend dem Differentialquotienten dl/dt in der Induktivität L" übersetzt in die Gruppe A getrieben. Sobald dieser Aufladestrom der Gruppe A den Null-Durchgang erreicht hat, öffnet man die Schalter S2 und S5. Die Gruppe A verbleibt wiederum in ihrem zweiten aufgeladenen Betriebszustand.

In der Ausführungsform nach Fig. 8 wird somit erstmalige Erzeugung und Nachlieferung der notwendigen elektrischen Energie während des Betriebs aus der vorgesehenen Batterie bewirkt.

Die Verwertung der nach Umladen auf die Gruppe A in der Gruppe B verbleibenden Restladung ist bei der Ausführungsform nach Fig. 8 durchführbar, soweit die elektrische Spannung der Restladung den Wert der Nenn-Spannung der Batterie 5 übersteigt. Wenn nun die bereits aufgeladene Gruppe A wieder in ihren ersten ungeladenen Betriebszustand bei geschlossenem Schalter S2 und offenem Schalter S4 zurückgeführt wird, wird die zuvor in Gruppe A gespeicherte elektrische Energie auf die Gruppe B umgeladen. Für erneute Aufladung der Gruppe A wird wieder der Schalter S2 geschlossen und die elektrische Energie aus der Gruppe B fliesst wieder in die Gruppe A. Die in der Gruppe B verbleibende Restladung kann dadurch auf die Gruppe A zusätzlich übertragen werden, indem der Schalter S5 geschlossen wird. Der Schalter S4 bleibt dabei noch offen, nämlich bis die Spannung an der Gruppe B auf den Wert der Spannung der Batterie 5 abgefallen ist. Erst dann wird der Schalter S4 geschlossen und erst dann erfolgt die Nachladung, d.h. die Kompensation zuvor eingetretener Verluste aus der Batterie 5. Die weiteren Phasen laufen dann wie beschrieben ab.

In Fig. 9 ist eine praktische Ausführung einer anzuwendenden Schaltung angegeben, deren Einzelheiten – soweit vorangehend beschrieben – mit den Fig. 6 und 8 übereinstimmende Bezugszeichen haben. Der Schalter S4 der Fig. 8 ist in Fig. 5 eine Diode. Der Schalter S5 ist in Fig. 9 ein spannungsfester Transistor, z.B. ein MOS-Leistungstransistor 6.

Der Schalter S2 ist in Fig. 9 ein Triac oder eine Antiparallelschaltung zweier Thyristoren, der bzw. die von einem Steuerglied 8 in derjenigen Taktfolge angesteuert werden, die für die Tätigkeit des Stellglieds vorgeschrieben ist. Mit 9 ist ein galvanisch trennender Zündkoppler, beispielsweise ein Piezo-Zündkoppler, nach den Patentanmeldungen DE-A-3 015 301.6 und DE-A-3 035 503.4 bezeichnet. Die Leitung 8' dient zum Abgriff und Kontrolle der erreichten Aufladespannung.

**Patentansprüche**

1. Elektrisch zu betätigendes Stellglied, das einen piezoelektrischen Körper hat, der aus einer Anzahl mit Elektroden versehenen Lamellen besteht, die sich in Bewegungsrichtung des Stellglieds zwischen den Enden dieses Körpers erstrecken, aus piezokeramischem Material bestehen und mit ihren zur Bewegungsrichtung parallelen Hauptflächen untereinander mechanisch gegeneinander unverschiebbar verbunden sind, wobei die Länge der Lamellen zwischen den Enden mindestens 5mal so gross wie die Dicke der einzelnen Lamellen ist und die Lamellen alle gleiche Dicke haben, und wobei bei Anlegen einer elektrischen Spannung mit die Polarisation des Materials der Lamellen unterstützender Feldrichtung sich dieser Körper verkürzt, wobei zwei derartige Körper ($\overline{10}$, $\overline{11}$) vorgesehen sind, die beide etwa gleiche Länge haben, nebeneinanderliegend angeordnet sind und an ihrem jeweils einen benachbarten Ende mittels einer Traverse ($\overline{19}$) miteinander verbunden sind und zwischen deren jeweils anderem Ende ($\overline{12}$, $\overline{4}$) die resultierende Relativbewegung zwischen diesen beiden Körpern ($\overline{10}$, $\overline{11}$) abzunehmen ist; wobei eine die seitliche Schubkraft ($\overline{21}$) aufnehmende Verbindung ($\overline{18}$) an der

Traverse (19) vorgesehen ist; und wobei die beiden piezoelektrischen Körper (10, 11) für phasenentgegengesetzten Betrieb elektrisch miteinander zu verbinden sind.

2. Stellglied mit wenigstens drei piezokeramischen Körpern, die durch Anlegen elektrischer Spannung mit die Polarisation unterstützender Feldrichtung zu betreiben sind, und die so angeordnet und miteinander elektrisch verbunden sind, dass ein in dem Stellglied innenliegender Körper gegenüber dazu aussenliegenden Körpern gegensinnige (sich addierende) longitudinale Dilatations- und Kontraktions-Bewegung ausführt, wobei die Körper etwa gleiche Länge haben, nebeneinanderliegend angeordnet sind und an ihrem jeweils einen benachbarten Ende miteinander verbunden sind, und zwischen deren jeweils anderem Ende die resultierende Relativbewegung zwischen innenliegendem Körper und den aussenliegenden Körpern abzunehmen ist, gekennzeichnet dadurch, dass alle piezokeramischen Körper (10, 10', 10'', 11, 12) für sich einen Aufbau aus Lamellen (13, 13') haben, die mit ihrer Länge parallel der Bewegungsrichtung (20) angeordnet sind und deren dazu parallele Hauptflächen gegeneinander unverschiebbar miteinander mechanisch verbunden sind, wobei die Länge der Lamellen (13, 13') zwischen den Enden 110, 210; 111, 211; 112, 212) des jeweiligen Körpers (10, 10', 11, 12) mindestens 5mal so gross wie die Dicke der einzelnen Lamelle (13, 13') ist und die Lamellen (13, 13') alle gleiche Dicke haben, und dadurch, dass für den (die) innenliegenden Körper (10, 10', 10'') ein elektrischer Anschluss (b, Gruppe B) vorgesehen ist, der für phasenentgegengesetzten elektrischen Betrieb galvanisch getrennt von jeweils einem Anschluss (d, f) der übrigen aussenliegenden Körper (11, 12) ist, die wiederum im Sinne einer Parallelschaltung (Gruppe A) miteinander verbunden sind.

3. Stellglied nach Anspruch 1 oder 2, gekennzeichnet dadurch, dass die Körper (10, 11, 10, 11, 12) eine flache Form haben, wobei die Hauptflächen der Lamellen (13, 13') mit den Hauptflächen des jeweiligen flachen Körpers zusammenfallen und dass diese flachen Körper mit ihren Hauptflächen einander gegenüberliegend nebeneinander angeordnet sind (Fig. 1, 2).

4. Stellglied nach Anspruch 1 oder 2, gekennzeichnet dadurch, dass die Körper (10, 11, 310, 311, 312) eine flache Form haben, dass die Hauptflächen der Lamellen (13, 13') mit den Hauptflächen des jeweiligen flachen Körpers zusammenfallen und dass diese flachen Körper so nebeneinander angeordnet sind, dass ihre Hauptflächen in einer Ebene liegen (Fig. 3).

5. Stellglied nach Anspruch 3 oder 4, gekennzeichnet dadurch, dass die Körper derart nahe aneinander angeordnet sind, dass zwischen phasenentgegengesetzt sich bewegenden Körpern (10, 11; 10, 10', 10''; 11, 12, 13; 310, 311, 312) ein Spaltvolumen vorliegt, das mit einer zähelastischen Dämpfungsmasse (25) ausgefüllt ist (Fig. 2; 2a).

6. Stellglied nach Anspruch 1, 3, 4 oder 5, gekennzeichnet dadurch, dass beide Körper (10, 11) in zur Bewegungsrichtung (20) senkrechter Ebene wenigstens angenähert gleich grossen Querschnitt haben.

7. Stellglied nach Anspruch 1, 3, 4 oder 5, gekennzeichnet dadurch, dass der piezoelektrische Körper (10) mit dem Aktionsende (4) des Stellglieds (1) einen Querschnitt hat, der zwischen dem 1- bis 0,5fachen desjenigen des anderen piezoelektrischen Körpers (11) liegt.

8. Stellglied nach Anspruch 2, 3, 4 oder 5, gekennzeichnet dadurch, dass der zur Bewegungsrichtung (20) senkrechte Querschnitt des innenliegenden Körpers (10) bzw. die Summe der Querschnitte mehrerer innenliegender Körper (10', 10'') wenigstens nahezu gleich gross der Summe der entsprechenden Querschnitte aller aussenliegenden Körper (11, 12) ist (Fig. 2a).

9. Stellglied nach Anspruch 2, 3, 4 oder 5, gekennzeichnet dadurch, dass die Summe der zur Bewegungsrichtung (20) senkrecht liegenden Querschnitte der aussenliegenden Körper (11, 12) das 1- bis 2fache der entsprechenden Querschnittsfläche des innenliegenden Körpers (10) beträgt, und dass das freie Ende des innenliegenden Körpers (10) das Aktionsende des Stellglieds ist.

10. Stellglied nach Anspruch 6, 8 oder 9, gekennzeichnet dadurch, dass alle piezoelektrischen Körper (10, 11, 10, 10', 10'', 11, 12) desselben identisch ausgeführt und identisch bemessen sind.

11. Stellglied nach Anspruch 8, gekennzeichnet dadurch, dass die Körper so bemessen sind, dass die elektrische (Gesamt-)Kapazität des (der) innenliegenden Körper(s) (10, 10', 10''; Gruppe B) wenigstens nahezu gleich gross wie die elektrische Gesamtkapazität aller parallelgeschalteter aussenliegender Körper (11, 12; Gruppe A) ist.

12. Stellglied nach einem der Ansprüche 1 bis 11, dadurch gekennzeichnet, dass dem einen oder den mehreren Körpern (10, 10) der einen Gruppe B ein so grosser elektrischer Zusatzkondensator parallelgeschaltet ist, dass dessen Kapazität zusammen mit der elektrischen Kapazität dieses bzw. dieser Körper (10, 10, 310) wenigstens nahezu gleich gross wie die elektrische Kapazität des einen anderen bzw. der in sich parallelgeschalteten anderen Körper (11; 11, 12; 311, 312) der Gruppe A ist.

13. Stellglied nach einem der Ansprüche 1, 3, 4, 6, 7, 10 oder 12, gekennzeichnet dadurch, dass das Stellglied (1) mit seinen beiden piezoelektrischen Körpern (10, 11) so mit einer elektrischen Schaltung verbunden ist, dass diese piezoelektrischen Körper (10, 11) eine Reihenschaltung zusammen mit einem Schalter (S2) und einer Induktivität (L) bilden, wobei diese Induktivität (L) eine Grösse hat, dass das Produkt aus dem Induktivitätswert (L) und dem Gesamt-Kapazitätswert (C) der Reihenschaltung der Kapazitäten der beiden gegenphasig elektrisch zu betreibenden piezoelektrischen Körper (10, 11) wenigstens angenähert der Beziehung

$$\frac{1}{L \cdot \overline{C}} = \omega^2$$

ist, worin ω die mechanische Grundresonanzfrequenz des Stellglieds (1) ist.

14. Stellglied nach Anspruch 2, 3, 4, 5, 8, 9, 10, 11 oder 12, gekennzeichnet dadurch, dass das Stellglied (1) an seinen Anschlüssen (a bis f) mit einer elektrischen Schaltung verbunden ist, wobei die galvanisch voneinander getrennten Anschlüsse (b; d und f) eine Reihenschaltung mit einer Induktivität (L) und einem Schalter (S2) der elektrischen Schaltung bilden, wobei die Induktivität (L) eine Grösse hat, die so bemessen ist, dass das Produkt aus dem Induktivitätswert und der Kapazität (C̄) wenigstens angenähert der Beziehung

$$\frac{1}{L \cdot \overline{C}} = \omega^2$$

ist, wobei ω die mechanische Grundresonanzfrequenz des Stellglieds (1) ist und C̄ der Gesamt-Kapazitätswert der Reihenschaltung der Kapazität des bzw. der Parallelschaltung innenliegenden Körper(s) (10; 10', 10''; Gruppe B) und der Kapazität der Parallelschaltung der aussenliegenden, gegensinnig zu betreibenden Körper (11, 12; Gruppe A) ist.

## Claims

1. Electrically operated actuator with a piezoelectric body consisting of a number of plates that are fitted with electrodes. The plates lie in the direction of motion of the actuator between the ends of this body and are made of piezoceramic material. They are mechanically rigidly connected to each other along the main surfaces, whereby the length of the plates from end to end is at least 5 times as long as the thickness of the individual plates, the plates being all of the same thickness. When an electric voltage with a field direction that supports the polarization of the material of which the plates are made is applied to the body, then the said body contracts longitudinally. This actuator is characterized by there being two such bodies (10̄, 11̄) of approximately the same length, arranged beside each other and connected to each other at one of the respective neighbouring ends by means of a tie-bar (19̄) and between whose other respective ends (12̄, 4̄) the resulting relative movement between the said two bodies (10̄, 11̄) is to be measured; by there being a connection (18̄) to the tie-bar (19̄) which absorbs the lateral shearing forces (21̄); and by the two piezoelectric bodies (10̄, 11̄) being electrically connected to each other for opposite phase operation.

2. Actuator with at least three piezoceramic bodies, which are to be operated by applying an electric voltage with a field direction that supports the polarization, and which are so arranged and electrically connected to each other that one of the internally positioned bodies, which are arranged in the opposite direction to the externally positioned bodies, executes cumulative longitudinal dilation and contraction movements, whereby the bodies are approximately the same length, are arranged beside each other and are connected to each other at one of their respective neighbouring ends, and between whose respective other ends the resulting relative movement between the internally and the externally positioned bodies is to be measured; characterized by each of the piezoceramic bodies (10, 10', 10'', 11, 12) having its own system of plates (13, 13'), which are arranged parallel to the direction of motion (20) longitudinally and whose main surfaces, which are also parallel to the direction of motion, are arranged side by side and are rigidly connected to each other mechanically, whereby the length of the plates (13, 13') between the ends (110, 210; 111, 211; 112, 212) of the respective body (10, 10', 11, 12) is at least 5 times as long as the thickness of the individual plates (13, 13'), the plates all being of the same thickness; and by there being an electrical connection (b, Group B) for the internally positioned body(ies) (10, 10', 10''), which is galvanically separated from one connection each (d, f) of the remaining externally positioned bodies (11, 12) for opposite phase electrical operation, which in turn are connected with each other, galvanically separated, as if in parallel (Group A).

3. Actuator in accordance with Claim 1 or 2, characterized by the bodies (10̄, 11̄, 10, 11, 12) being of flat shape, whereby the main surfaces of the plates (13, 13') coincide with the main surfaces of the respective flat bodies; and by these flat bodies being arranged beside each other in opposite directions (Fig. 1, 2).

4. Actuator in accordance with Claim 1 or 2, characterized by the bodies (10̄, 11̄, 310, 311, 312) being of flat shape; by the main surfaces of the plates (13, 13') coinciding with the respective flat bodies; and by these flat bodies being arranged beside each other in such a way that their main surfaces all lie in one plane (Fig. 3).

5. Actuator in accordance with Claim 3 or 4; characterized by the bodies being arranged close to each other in such a way that there is gap between moving bodies of opposite phase (10̄, 11̄; 10, 10', 10''; 11, 12, 13; 310, 311, 312), the gap being filled with a viscoplastic damping mass (25) (Fig. 2; 2a).

6. Actuator in accordance with Claim 1, 3, 4, or 5; characterized by both bodies (10̄, 11̄) having at least approximately the same sized cross-section in the plane perpendicular to the direction of motion (20̄).

7. Actuator in accordance with Claim 1, 3, 4, or 5; characterized by the piezoelectric body (10̄) with the operating end (4̄) of the actuator (1̄) having a cross-section which is between 1 and 0.5 times that of the cross-section of the other piezoelectric body (11̄).

8. Actuator in accordance with Claim 2, 3, 4 or 5; characterized by the cross-section perpendicular to the direction of motion (20) of the internally positioned body (10) or the sum of the cross-sections of several internally positioned bodies (10', 10'') being at least almost as big as the sum of the corresponding cross-sections of all the externally positioned bodies (11, 12) (Fig. 2a).

9. Actuator in accordance with Claim 2, 3, 4 or 5; characterized by the sum of the cross-sections parallel to the direction of motion (20) of the externally positioned bodies (11, 12) being 1 to 2 times larger than the corresponding cross-section area of the internally positioned body (10); and the free end of the internally positioned body (10) being the operating end of the actuator.

10. Actuator in accordance with Claim 6, 8 or 9; characterized by all piezoelectric bodies ($\overline{10}$, $\overline{11}$, 10, 10', 10'', 11, 12) of the said actuator being identically constructed and identically measured.

11. Actuator in accordance with Claim 8, characterized by the bodies being so measured that the electric (total) capacitance of the internally positioned body(ies) (10, 10', 10''; Group B) is at least almost as big as the electric total capacitance of all the externally positioned bodies that are connected in parallel (12; Group A).

12. Actuator in accordance with one of the Claims 1 to 11; characterized by such a large electric extra condensor being connected in parallel to one or more of the bodies ($\overline{10}$, 10) of the one Group B, that its capacitance together with the electric capacitance of this/these body(ies) ($\overline{10}$, 10, 310) is at least almost as large as the electric capacitance of that of one of the other bodies or that of the bodies connected in parallel ($\overline{11}$, 11, 12; 311, 312) of Group A.

13. Actuator in accordance with the one of the claims 1, 3, 4, 6, 7, 10 or 12; characterized by the actuator ($\overline{1}$) with its two piezoelectric bodies ($\overline{10}$, $\overline{11}$) being connected in such a way with an electric circuit that these piezoelectric bodies ($\overline{10}$, $\overline{11}$) form a series connection together with a circuit breaker (S2) and an inductance (L), whereby this inductance (L) is of such a size that the product of the inductance value (L) and the total capacitance value ($\overline{C}$) of the series connection of the capacities of the two piezoelectric bodies ($\overline{10}$, $\overline{11}$) that are to be operated electrically in phase opposition is at least approximately that of the relationship

$$\frac{1}{L \cdot \overline{C}} = \omega^2$$

whereby $\omega$ is the mechanical basic resonance frequency of the actuator (1).

14. Actuator in accordance with Claim 2, 3, 4, 5, 8, 9, 10, 11 or 12; characterized by the actuator (1) being connected to an electric circuit via its connections (a to f), whereby the galvanically separated connections (b; d and f) form a series connection with an inductance (L) and a switch (S2) of the electric circuit, whereby the inductance (L) is of a size that is measured in such a way that the product of the inductance value and the capacitance ($\overline{C}$) is at least approximately that of the relationship

$$\frac{1}{L \cdot \overline{C}} = \omega^2$$

whereby $\omega$ is the mechanical basic resonance frequency of the actuator (1) and $\overline{C}$ is the total capacitance value of the series connection of the capacities of the internally positioned body(ies) (10; 10', 10''; Group 5) connected in parallel and of the capacities of the externally positioned bodies connected in parallel that are to be operated in the opposite direction (11, 12; Group A).

**Revendications**

1. Organe final commandé électriquement et ayant un corps piézo-électrique, qui est composé d'une quantité de lamelles pourvues d'électrodes qui s'étendent dans le sens de mouvement de l'organe final entre les extrémités de ce corps, sont composées de piézo-céramique et sont, avec leurs faces principales parallèles au sens de mouvement, reliées mécaniquement entre elles sans être décalables les unes par rapport aux autres, la longueur des lamelles entre les extrémités étant au minimum 5 fois plus élevée que l'épaisseur d'une seule lamelle, les lamelles ayant toutes la même épaisseur, et ce corps se raccourcissant lors de l'application d'une tension électrique avec direction de champ soutenant la polarisation de la matière dont sont composées les lamelles; caractérisé par le fait que deux corps de ce type ($\overline{10}$, $\overline{11}$) sont prévus, ayant tous deux environ la même longueur, étant disposés côte à côte et joints à leur extrémité contiguë respective par une traverse ($\overline{19}$) et entre l'autre extrémité respective ($\overline{12}$), ($\overline{4}$) desquels le mouvement relatif résultant d'entre ces deux corps ($\overline{10}$, $\overline{11}$) est relevé; qu'une connexion ($\overline{18}$) captant la force latérale de poussée ($\overline{21}$) est prévue sur la traverse ($\overline{19}$) et que les deux corps piézo-électriques ($\overline{10}$, $\overline{11}$) sont électriquement reliables l'un à l'autre pour opération de phases opposées.

2. Organe final avec au minimum trois corps en piézo-céramique, conduits par l'application d'une tension électrique avec direction de champ soutenant la polarisation et disposés et reliés électriquement les uns aux autres de telle sorte qu'un corps situé à l'intérieur de l'organe final effectue face à des corps extérieurs des mouvements de dilatation et de contraction en sens inverse (cumulatifs) longitudinaux, les corps ayant environ la même longueur, étant disposés les uns à côté des autres et étant reliés les uns aux autres à leur extrémité contiguë respective, et entre l'autre extrémité desquels le mouvement relatif résultant d'entre les corps intérieurs et extérieurs est relevé; caractérisé par le fait que tous les corps en piézo-céramique (10, 10', 10'', 11, 12) ont pour eux une construction de lamelles (13, 13'), qui sont placées sur leur longueur parallèlement au sens de mouvement (20) et dont les faces principales – également parallèles à ce sens – sont reliées mécaniquement entre elles sans être décalables les unes par rapport aux autres, la longueur des lamelles (13, 13') entre les extrémités (110, 210; 111, 211; 112, 212) du corps correspondant (10, 10', 11, 12) étant au minimum 5 fois plus élevée que l'épaisseur d'une seule lamelle (13, 13'), les lamelles (13, 13') ayant toutes la même épaisseur, et par le fait que le (les) corps placé(s) à l'intérieur (10, 10', 10'') peuvent être électriquement branchés, ce branchement électrique (b, groupe B) étant pour les opérations électriques à phases opposées galvaniquement séparé de respectivement un branchement (d, f) des autres corps extérieurs (11, 12), qui par contre sont au sens d'un couplage en parallèle (groupe A) reliés entre eux.

3. Organe final selon spécification 1 ou 2; caractérisé par le fait que les corps ($\overline{10}$, $\overline{11}$, 10, 11, 12) ont une forme plane, les faces principales des lamelles (13, 13') coincidant avec les faces principales du corps plat respectif et que ces corps plats, avec leurs faces principales, sont disposés face à face, les uns à côté des autres (schémas 1, 2).

4. Organe final selon spécification 1 ou 2; caractérisé par le fait que les corps ($\overline{10}$, $\overline{11}$, 310, 311, 312) ont une forme plane, que les faces principales des lamelles (13, 13') coincident avec les faces principales du corps plat correspondant et que ces corps plats sont disposés les uns à côté des autres de telle sorte que leurs faces principales se situent sur un plan (schéma 3).

5. Organe final selon spécification 3 ou 4; caractérisé par le fait que les corps sont disposés si près les uns des autres qu'entre les corps se mouvant en phases opposées ($\overline{10}$, $\overline{11}$; 10, 10', 10''; 11, 12, 13; 310, 311, 312) se trouve un volume de clivage rempli d'une substance d'amortissement viscoplastique (25) (schéma 2; 2a).

6. Organe final selon spécification 1, 3, 4 ou 5; caractérisé par le fait que les deux corps ($\overline{10}$, $\overline{11}$) sur plan vertical dans le sens du mouvement ($\overline{20}$) ont tout du moins à peu près un profil de même grandeur.

7. Organe final selon spécification 1, 3, 4 ou 5; caractérisé par le fait que le corps piézo-électrique ($\overline{10}$) avec l'extrémité d'action ($\overline{4}$) de l'organe final ($\overline{1}$) a un profil s'élevant de 1 à 0,5 fois celui de l'autre corps piézo-électrique ($\overline{11}$).

8. Organe final selon spécification 2, 3, 4 ou 5; caractérisé par le fait que le profil – vertical par rapport au sens de mouvement (20) – du corps intérieur (10) ou la somme des profils de plusieurs corps intérieurs (10', 10'') a au moins à peu près la même grandeur que la somme des profils correspondant de tous les corps extérieurs (11, 12) (schéma 2a).

9. Organe final selon spécification 2, 3, 4 ou 5; caractérisé par le fait que la somme des profils – verticaux par rapport au sens de mouvement (20) – des corps extérieurs (11, 12) s'élève de 1 à 2 fois la surface de profil correspondant du corps intérieur (10) et que l'extrémité libre du corps intérieur (10) est l'extrémité d'action de l'organe final.

10. Organe final selon spécification 6, 8 ou 9; caractérisé par le fait que tous les corps piézo-électriques ($\overline{10}$, $\overline{11}$, 10, 10, 10, 11, 12) sont exécutés et mesurés de façon identique.

11. Organe final selon spécification 8; caractérisé par le fait que les corps sont mesurés de telle manière que la capacité (totale) électrique du (des) corps intérieur(s) (10, 10', 10'', groupe B) soit au moins à peu près aussi importante que la capacité électrique totale de tous les corps extérieurs connectés en parallèle (11, 12; groupe A).

12. Organe final selon l'une des spécifications 1 à 11; caractérisé par le fait qu'à l'un des corps ou à plusieurs corps ($\overline{10}$, 10) du groupe B un condensateur supplémentaire électrique est connecté en parallèle, dont l'importance est telle que sa capacité calculée avec la capacité électrique de ce ou de ces corps ($\overline{10}$, 10, 310) a au moins à peu près la même importance que la capacité électrique de l'autre corps ou des autres corps connectés en parallèle ($\overline{11}$; 11, 12; 311, 312) du groupe A.

13. Organe final selon l'une des spécifications 1, 3, 4, 6, 7, 10 ou 12; caractérisé par le fait que l'organe final ($\overline{1}$) avec ses deux corps piézo-électriques ($\overline{10}$, $\overline{11}$) est relié à un branchement électrique de telle sorte que ces corps piézo-électriques ($\overline{10}$, $\overline{11}$) forment un couplage en série avec le commutateur (S2) et une inductance (L) – inductance L ayant une grandeur – , que le produit de la valeur d'inductance (L) et de la valeur de capacité totale ($\overline{C}$) du couplage en série des capacités des deux corps piézo-électriques actionnés électriquement en phases opposées ($\overline{10}$, $\overline{11}$) est au moins proche du rapport

$$\frac{1}{L \cdot \overline{C}} = \omega^2$$

$\omega$ représentant la fréquence de résonance fondamentale mécanique de l'organe final ($\overline{1}$).

14. Organe final selon spécification 2, 3, 4, 5, 8, 9, 10, 11 ou 12; caractérisé par le fait que les branchements (de a à f) de l'organe final (1) sont reliés à un branchement électrique, les branchements galvaniquement séparés les uns des autres (b; d et f) formant un couplage en série avec une inductance (L) et un commutateur (S2) du branchement électrique, l'inductance (L) ayant une grandeur mesurée de telle sorte que le produit de la valeur d'inductance et de la capacité ($\overline{C}$) soit au moins proche du rapport

$$\frac{1}{L \cdot \overline{C}} = \omega^2$$

$\omega$ représentant la fréquence de résonance fondamentale mécanique de l'organe final (1) et $\overline{C}$ représentant la valeur de capacité totale du couplage en série de la capacité du couplage en parallèle du ou des corps intérieur(s) (10; 10', 10''; groupe 5) et de la capacité du couplage en parallèle des corps extérieurs conduits en sens inverse (11, 12: groupe A).

0 054 704

# FIG 1

# FIG 2a

# FIG 2

# FIG 3

# FIG 4

# FIG 5

# FIG 6

# FIG 7

## FIG 8

## FIG 9